# FASCICULE DE BREVET EUROPEEN

(11) **EP 1 536 161 B1**
(45) Date de publication et mention de la délivrance du brevet: **13.12.2006**
(21) Numéro de dépôt: 03405841.2
(22) Date de dépôt: 25.11.2003
(51) Int. Cl.: F16H 55/18

(54) **Dispositif de rattrapage de jeu dans un engrenage**
Spielfreie Getriebeanordnung
Anti-backlash gear assembly

(43) Date de publication de la demande: 01.06.2005
(73) Titulaire: BOBST S.A., 1001 Lausanne (CH)
(72) Inventeur: Clement, Philippe, 1305 Penthalaz (CH)
(74) Mandataire: Poirier, Jean-Michel Serge

(56) Documents cités:
- DE-U- 9 207 637
- FR-A- 473 246
- US-A- 2 966 806
- US-A- 6 148 684

## Description

La présente invention se rapporte à un dispositif de rattrapage de jeu dans un engrenage dans lequel un mobile denté menant est divisé en deux organes dentés coaxiaux reliés l'un à l'autre par des moyens élastiques conformés pour créer un couple entre ces deux organes dentés coaxiaux.

On a déjà proposé de nombreuses solutions pour rattraper le jeu dans un engrenage. On peut citer par exemple, la solution proposée dans le US 4'660'432, selon laquelle un pignon menant engrène avec un pignon mené calé sur un arbre et associé à deux roues situées de part et d'autre de ce pignon menant. Les roues sont liées au pignon menant par des plots élastiques soumis à une précontrainte assurant un décalage angulaire entre le pignon menant et les deux roues associées. Un tel dispositif nécessite trois roues et la présence des plots élastiques traversant deux des roues ne permet pas d'avoir des roues ou pignons de petit diamètre, aptes à transmettre un couple élevé, la présence des trous affaiblissant la planche de la roue, de sorte qu'un espace suffisant doit être laissé entre le bord des trous et le fond de la denture. De ce fait, le diamètre minimum de la roue se trouve très sensiblement augmenté.

Un autre dispositif de rattrapage de jeu est décrit dans le US 3'035'454 dans lequel, les éléments de liaison élastiques entre deux roues coaxiales s'étendent en direction radiale. A nouveau, des ouvertures relativement grandes doivent être ménagées dans une des roues pour permettre à des tiges perpendiculaires à la planche d'une des roues de traverser l'autre roue pour venir en prise avec les éléments de liaison élastiques radiaux, solidaires de l'autre roue, ce qui affaiblit la roue percée et ne permet pas d'utiliser une roue de petit diamètre. La longueur des bras de liaison élastiques est aussi limitée par le rayon de la roue.

Un autre dispositif de rattrapage de jeu utilisant des barres de torsion est décrit dans le EP 1'034'923, qui constitue l'état de la technique le plus prôche. L'inconvénient principal de cette solution vient du fait que les barres de torsion doivent traverser les pignons, ce qui limite le couple qu'ils peuvent transmettre du fait que ces trous affaiblissent les pignons.

Le but de la présente invention est de remédier, au moins en partie, aux inconvénients susmentionnés.

A cet effet, la présente invention a pour objet un dispositif de rattrapage de jeu dans un engrenage tel que défini par la revendication 1.

La présente invention présente plusieurs avantages. Le plus important sans doute est le fait que les tiges de flexion s'étendent d'un côté seulement du second organe denté, en sorte qu'elles ne doivent pas le traverser. Ainsi, cet organe denté n'est pas affaibli.

Avantageusement, la face de ce second organe denté sur laquelle s'ouvrent les logements des secondes extrémités des tiges de flexion se situe à une distance axiale du bord adjacent de la denture de ce second organe denté, au moins égale à la longueur axiale de ces logements.

Ces logements sont de préférence ménagés dans un flasque solidaire du second organe denté et celui-ci peut avoir un diamètre différent, en particulier plus grand que celui de ce second organe denté, offrant des possibilités techniques nouvelles par rapport aux dispositifs connus.
Un autre avantage de la présente invention, vient du fait que la longueur des barres n'est pas limitée par les dimensions des organes dentés, comme dans les dispositifs de l'art antérieur. Or, plus les barres sont longues moins la valeur de la précontrainte exercée par les barres change avec une variation d'entraxe. De ce fait, la présente invention ne se limite pas à un entraxe fixe. Etant donné que le jeu d'engrenage varie en fonction de l'entraxe et que plus on allonge les barres de flexion, moins la précontrainte varie en fonction de la variation d'entraxe, on peut avoir une force de précontrainte à peu près constante pour des entraxes différents, ce qui n'est pas possible avec les dispositifs dans lesquels la longueur des ressorts de précontrainte est limitée par la dimension des roues. De ce fait, le couple qui peut être transmis par l'engrenage utilisant le dispositif de rattrapage de jeu objet de la présente invention, ne varie pratiquement pas en fonction du jeu d'engrenage à rattraper.

Le dessin annexé illustre, schématiquement et à titre d'exemple, une forme d'exécution du dispositif de rattrapage de jeu objet de la présente invention.
La figure 1 est une vue en perspective de cette forme d'exécution;
la figure 2 est une vue partiellement en coupe de la figure 1;
la figure 3 est une vue selon III-III de la figure 2, montrant l'outil destiné à mettre le dispositif sous précontrainte.

Le dispositif de rattrapage de jeu selon la présente invention comporte un arbre 1 solidaire d'un premier organe denté 2. Bien que seules deux dents sont représentées sur les figures, il s'agit évidemment d'un pignon tout à fait classique, denté sur tout son pourtour. Cet arbre 1 se prolonge par une partie la, à laquelle sont associés les organes pour le rattrapage de jeu d'engrenage.

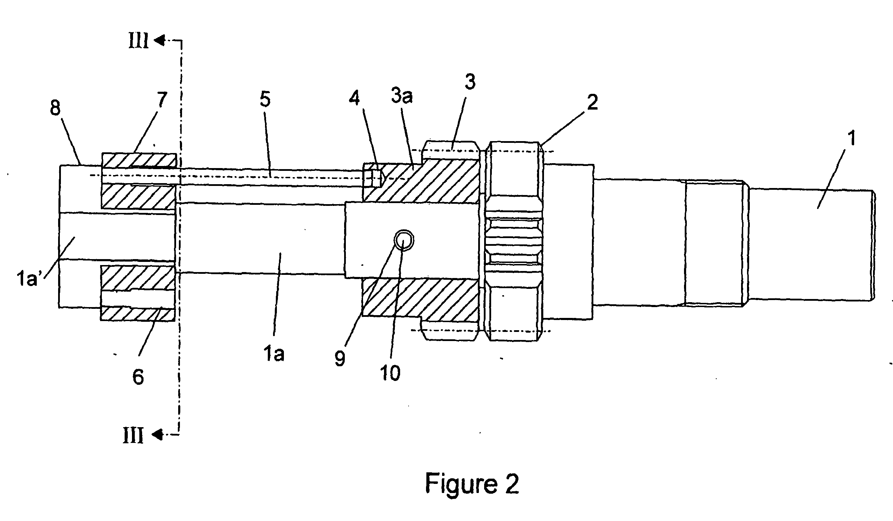

Le premier de ces organes est un second organe denté 3 qui présente une denture identique à la denture du premier organe denté 2. Dans cet exemple, ce second organe denté 3 comporte, du côté opposé au premier organe denté 2, une partie non dentée 3a. Une série de logements 4, dont seul un est visible sur la figure 2, s'ouvrent sur la face plane tournée vers l'extérieur du second organe denté 3. Dans cet exemple, ces logements 4 s'étendent sur une profondeur inférieure à la longueur axiale de la partie non dentée 3a du second organe denté 3. De ce fait, les logements 4 n'affaiblissent pas la partie dentée du second organe denté 3, destinée à transmettre un couple qui peut être important, à un organe denté mené (non représenté), qui doit venir en prise avec lui. A noter que dans l'exemple illustré, la partie non dentée 3a fait partie de la même pièce que l'organe denté 3. On pourrait aussi envisager de former la partie non dentée 3a sur une autre pièce qui serait fixée de toute manière appropriée à l'organe denté 3. C'est ainsi que l'on pourrait alors avoir une partie dentée 3 d'un diamètre plus petit que celui de la partie non dentée 3a.

Chaque logement 4 reçoit une extrémité d'une tige de flexion 5, de sorte que ces tiges 5 sont régulièrement réparties sur un cercle concentrique à la partie la de l'arbre 1. A leurs autres extrémités, les tiges de flexion 5 sont reçues chacune dans un logement 6 ménagé dans un flasque 7. Comme dans le cas de la partie non dentée 3a solidaire du second organe denté 3, les logements 6 sont ménagés sur un cercle concentrique à la partie la de l'arbre 1.

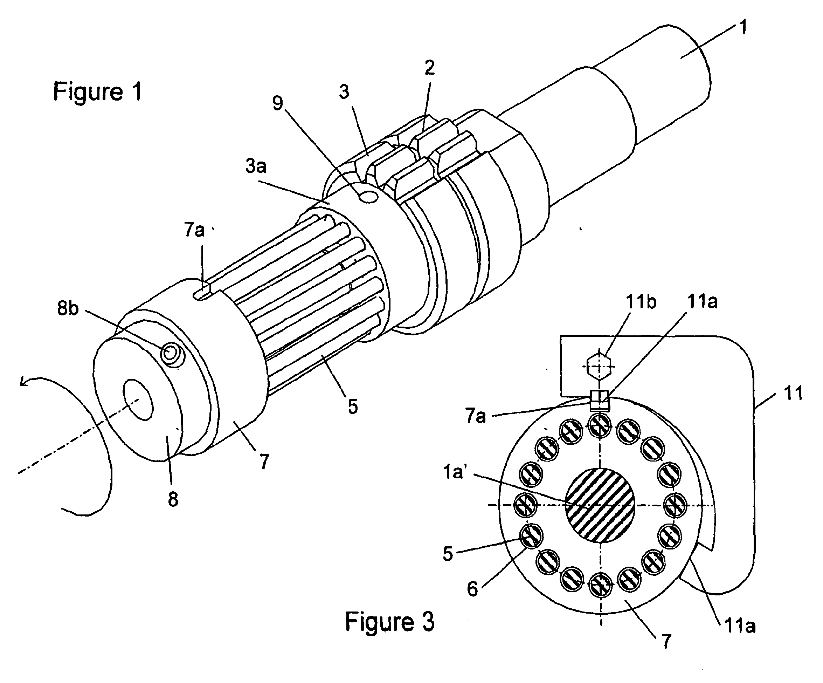

Le flasque 7 présente aussi une ouverture centrale. Toutefois, cette ouverture ne reçoit pas directement l'extrémité 1a' de la partie 1a de l'arbre 1, une partie tubulaire expansible 8a d'un organe de serrage 8 étant interposée entre l'ouverture centrale du flasque 7 et l'extrémité 1a' de la partie la de l'arbre 1. Avantageusement cet organe de serrage est un accouplement à friction à expansion hydraulique de type connu, tel que celui décrit dans le WO 98/46896 et commercialisé par ETP Transmission AB Linköping Suède, de sorte qu'il ne sera pas décrit ni représenté en détail ici. Le principe de cet organe de serrage 8 consiste à avoir, à l'intérieur de la partie tubulaire 8a, une mince chambre annulaire qui communique avec un espace ménagé dans la partie de plus grand diamètre de cet organe de serrage 8, adjacente à la face externe du flasque 7. Tout le volume de l'espace interne et de la chambre annulaire est rempli de liquide. Une vis 8b, visible sur la figure 1, munie de moyens d'étanchéité, se visse dans la partie de plus grand diamètre de l'organe de serrage 8 et communique avec l'espace interne ménagé à l'intérieur de celui-ci. En vissant cette vis 8b, on réduit le volume de cet espace interne contenant le liquide, ce qui permet de mettre ce liquide sous pression et de faire gonfler la partie tubulaire 8a de cet organe de serrage 8, solidarisant ainsi le flasque 7 autour de l'extrémité 1a' de l'arbre 1.

Pour permettre de régler la précontrainte à laquelle les tiges de flexion 5 seront soumises sans devoir mettre les organes dentés 2, 3 en prise avec une roue dentée menée, ce qui permet de régler cette précontrainte sur le dispositif de rattrapage de jeu avant de le monter dans un train d'engrenage, un alésage radial 9 est ménagé dans la partie non dentée 3a solidaire du second organe denté 3. Une goupille radiale 10, de diamètre inférieur à celui de l'alésage 9, est fixée dans la partie la de l'arbre 1. Le jeu radial entre la cheville 10 et l'alésage 9 est choisi en fonction du jeu d'engrenage à rattraper. En l'absence de précontrainte sur les tiges de flexion 5, les dentures des deux organes dentés 2 et 3 sont parfaitement alignées et la cheville 10 est concentrique à l'alésage 9.

La figure 3 montre un outil 11, du genre clé à ergot, utilisé pour permettre d'appliquer une précontrainte de flexion entre le flasque 7, qui peut être rendu solidaire de l'arbre 1, la grâce à l'organe de serrage 8 et devenir ainsi solidaire du premier organe denté 2 et le second organe denté 3 qui a un certain degré de liberté par rapport au premier. Cet outil 11 présente un ergot 11a qui vient en prise avec une encoche 7a du flasque 7, un bras dont l'extrémité 11a s'appuie contre le pourtour du flasque 7 et une ouverture hexagonale 11b destinée à recevoir une clé dynamométrique (non représentée).

La mise sous précontrainte peut être réalisée sur le dispositif de rattrapage de jeu avant son montage. A cet effet, il faut fixer l'arbre 1 dans un mandrin fixe (non représenté). Ensuite, on introduit la clé dynamométrique dans l'ouverture hexagonale 11b et on applique un couple déterminé au flasque 7, ce qui va générer une flexion en "S" de chaque tige ou barre de flexion 5. Ce couple sera choisi supérieur au couple de transmission le plus élevé que le dispositif de rattrapage de jeu selon l'invention devra transmettre. Ensuite, on visse la vis 8b de l'organe de serrage 8, jusqu'à ce que la pression exercée par le liquide situé à l'intérieur atteigne une valeur déterminée, choisie pour que la force de frottement entre sa partie tubulaire 8a et l'extrémité 1a' de l'arbre 1 d'une part et le flasque 7, d'autre part soit supérieure au couple à transmettre.

Ainsi, les barres de flexion 5 exercent une précontrainte déterminée entre les deux organes dentés 2, 3. Cette précontrainte est destinée à rattraper le jeu d'engrenage entre ces organes dentés 2, 3 et la roue menée (non représenté) et à transmettre entre ces organes dentés menant 2, 3 et la roue menée, un couple inférieur à la précontrainte, assurant ainsi le rattrapage de jeu durant la transmission de ce couple.

## Revendications

1. Dispositif de rattrapage de jeu dans un engrenage dans lequel un mobile denté menant est divisé en deux organes dentés coaxiaux (2, 3) reliés l'un à l'autre par des tiges de flexion (5) conformés pour créer un couple entre ces deux organes dentés coaxiaux (2, 3), **caractérisé en ce qu'**un premier (2) desdits organes dentés est solidaire d'un arbre d'entraînement (1, 1a)) et le second (3) de ces organes dentés est monté librement sur ledit arbre (1a), la face plane dudit second organe denté (3), opposée au premier organe denté (2), a une partie non dentée (3a) présentant des logements (4) disposés autour dudit arbre (1a) pour recevoir les premières extrémités respectives de tiges de flexion (5), qui s'étendent, avec ledit arbre (1a), à l'extérieur dudit organe denté (3) et **en ce qu'**un flasque (7), muni d'un passage axial pour recevoir ledit arbre (1a') et de logements (6) disposés autour de ce passage axial, pour recevoir les secondes extrémités respectives desdites tiges de flexion (5), comporte des moyens (8) pour le serrer sur ledit arbre (1a') dans une position angulaire apte à appliquer auxdites tiges (5) une contrainte de flexion élastique réglable en fonction du couple désiré entre lesdits organes dentés (2, 3).

2. Dispositif selon la revendication 1, dans lequel ladite face plane du second organe denté (3), opposée au premier organe denté (2) se situe à une distance axiale du bord adjacent de la denture dudit second organe denté (3), au moins égale à la longueur axiale des logements (4) pour recevoir les premières extrémités respectives desdites tiges de flexion (5).

3. Dispositif selon la revendication 2, dans lequel lesdits logements (4) pour recevoir les premières extrémités respectives desdites tiges de flexion (5) sont ménagés dans un organe distinct fixé audit second organe denté.

4. Dispositif selon la revendication 3, dans lequel le diamètre externe dudit organe distinct fixé audit second organe denté (3) présente un diamètre supérieur à celui de ce second organe denté (3).

## Claims

1. Anti-backlash device in a gear in which a toothed driving gear element is divided into two coaxial toothed members (2, 3) attached to one another by deflection rods (5) adapted to create a torque between the two coaxial toothed members (2, 3), **characterised in that** a first (2) of said toothed members is fixedly attached to a drive shaft (1, 1 a) and the second (3) of said toothed members is mounted freely on the said shaft (1), the planar surface of said second toothed member (3), opposite the first toothed member (2), has a non-toothed part (3a) having seats (4) arranged around said shaft (1) in order to receive the respective first ends of deflection rods (5), which extend, with the said shaft (1), outside said toothed member (3) and **in that** a flange (7), provided with an axial passage to receive the end (1 a') of said shaft (1) and with seats (6) arranged around the axial passage, to receive the respective second ends of said deflection rods (5), comprises means (8) for clamping it on the said end (1 a') of said shaft (1) in an angular position adapted to apply to the said rods (5) an elastic deflection stress adjustable according to the desired torque between the said toothed members (2, 3).

2. Device according to claim 1, wherein said planar surface of the second toothed member (3), opposite the first toothed member (2) is at an axial distance from the adjacent edge of the toothing of said second toothed member (3), at least equal to the axial length of the seats (4) to receive the respective first ends of said deflection rods (5).

3. Device according to claim 2, wherein the said seats (4) for receiving the respective first ends of said deflection rods (5) are formed in a separate member fixed on the said second toothed member.

4. Device according to claim 3, wherein the outside diameter of said separate member fixed on the said second toothed member (3) has a larger diameter than the diameter of said second toothed member (3).

## Patentansprüche

1. Vorrichtung zum Beseitigen von Spiel in einem Getriebe, bei welcher ein treibendes Zahnelement in zwei koaxiale gezahnte Organe (2, 3) unterteilt ist, die mittels Biegestangen (5) miteinander verbunden sind, die dazu angepasst sind, um zwischen diesen koaxialen gezahnten Organen (2, 3) ein Drehmoment zu erzeugen, **dadurch gekennzeichnet, dass** ein erstes (2) der gezahnten Organe mit einer Antriebswelle (1, 1a) verbunden ist und das zweite (3) dieser gezahnten Organe auf der Welle (1a) frei montiert ist, wobei die dem ersten gezahnten Organ (2) gegenüberliegende, ebene Fläche des zweiten gezahnten Organs (3) einen nicht gezahnten Teil (3a) aufweist, der um die Welle (1a) herum angeordnete Aufnahmen (4) aufweist, um die jeweils ersten Enden der Biegestangen (5) aufzunehmen, die sich mit der Welle (1a) außerhalb des gezahnten Organs (3) erstrecken, und dass ein Flansch (7), der mit einem axialen Durchgang zum Aufnehmen der Welle (1a') und mit Aufnahmen (6) versehen ist, die um diesen axialen Durchgang herum angeordnet sind, um die jeweils zweiten Enden der Biegestangen (5) aufzunehmen, Mittel (8) umfasst, um die Welle (1a') in einer Winkelstellung zu verriegeln, die dazu geeignet ist, auf die Stangen (5) eine elastische Biegespannung auszuüben, die in Abhängigkeit des zwischen den gezahnten Organen (2, 3) gewünschten Drehmoments einstellbar ist.

2. Vorrichtung gemäß Anspruch 1, bei welcher sich die dem ersten gezahnten Organ (2) gegenüberliegende, ebene Fläche des zweiten gezahnten Organs (3) in einem axialen Abstand von dem Rand befindet, welcher der Zahnung des zweiten gezahnten Organs (3) benachbart ist, wobei dieser axiale Abstand zumindest gleich der axialen Länge der Aufnahmen (4) zum Aufnehmen der jeweils ersten Enden der Biegestangen (5) ist.

3. Vorrichtung gemäß Anspruch 2, bei welcher die Aufnahmen (4) zum Aufnehmen der jeweils ersten Enden der Biegestangen (5) in einem gesonderten Organ angeordnet sind, welches an dem zweiten gezahnten Organ befestigt ist.

4. Vorrichtung gemäß Anspruch 3, bei welcher der äußere Durchmesser des an dem zweiten gezahnten Organ (3) befestigten, gesonderten Organs einen größeren Durchmesser als dieses zweite gezahnte Organ (3) aufweist.
